# EUROPÄISCHE PATENTSCHRIFT

(11) **EP 1 906 614 B1**
(45) Veröffentlichungstag und Bekanntmachung des Hinweises auf die Patenterteilung: **05.09.2012**
(21) Anmeldenummer: 06020451.8
(22) Anmeldetag: 28.09.2006
(51) Int. Cl.: H04L 29/06

(54) **Verfahren, Kommunikationsendeinrichtung, Verbindungssteuerung und Kommunikationssystem zum Abwickeln von Verbindungen**
Method, communication terminal, connection controller and communication system for connections processing
Méthode, terminal de communication, contrôleur de connexion et système de communication pour traitement de connexions

(43) Veröffentlichungstag der Anmeldung: 02.04.2008
(73) Patentinhaber: Siemens Enterprise Communications GmbH & Co. KG, 81379 München (DE)
(72) Erfinder: Zimmermann, Werner, 58708 Menden (DE)
(74) Vertreter: Fritzsche, Thomas

(56) Entgegenhaltungen:
- EP-A- 1 478 157
- EP-A- 1 705 931
- JP-A- 2006 197 111
- US-B1- 6 795 395
- FENG CAO ET AL.: "Security Analysis for IP-based Government Emergency Telephony Service" AVAILABILITY, RELIABILITY AND SECURITY, 2006. ARES 2006. THE FIRST INTERNATIONAL CONFERENCE ON VIENNA, AUSTRIA 20-22 APRIL 2006, PISCATAWAY, NJ, USA,IEEE, 20. April 2006 (2006-04-20), Seiten 496-501, XP010912885 ISBN: 0-7695-2567-9
- CISCO SYSTEMS: "Call Admission Control for H.323 VoIP Gateways" INTERNET ARTICLE, [Online] 24. Oktober 2005 (2005-10-24), Seiten 1-18, XP002423727 Gefunden im Internet: URL:http://www.cisco.com/univercd/cc/td/do c/product/software/ios122/122newft/122t/12 2t11/ftcac58.htm> [gefunden am 2007-03-07]

## Beschreibung

In modernen, IP-basierten (IP: Internet Protocol) Sprachkommunikationssystemen zeichnen sich im Sprachkommunikationssystem vorhandene IP-Endgeräte üblicherweise dadurch aus, dass sie mit Prozessoren und Speicherbausteinen ausgestattet sind. Bei jedem Verbindungsversuch gemäß der ITU-T-Empfehlung H.323 (ITU: International Telecommunication Union; ITU-T: ITU Telecommunication Standardization Sector) werden durch den Prozessor Speicher-Ressourcen belegt, die nach Beendigung der Verbindung wieder freigegeben werden. Eine derartige Belegung von Speicher erfolgt beispielsweise im Rahmen einer Signalisierungsverbindung gemäß der ITU-T-Empfehlung H. 225.0 für eine aktive eingehende oder gehende Sprachverbindung. Darüber hinaus wird eine derartige Signalisierungsverbindung ebenfalls für gehaltene eingehende oder gehende Verbindungen aufgebaut, so dass ein IP-Endgerät ausreichend Speicher-Ressourcen für alle gleichzeitig aktiven und alle gehaltenen Rufe bereitzustellen hat.

Kann ein IP-Endgerät für eine neue Verbindung auf nicht genügend freie Speicher-Ressourcen zurückgreifen, kann es die Verbindung im Fall einer eingehenden Verbindung abweisen. Im Fall einer gehenden Verbindung kann einem Benutzer beispielsweise signalisiert werden, dass keinerlei weitere ausgehende Verbindungen möglich sind. Ein Abfangen derartiger Situationen vorab durch eine am Verbindungsaufbau beteiligte Verbindungssteuerung erweist sich als schwierig, da jedes IP-Endgerät einen unterschiedlichen Speicherausbau und Speicherbedarf aufweisen kann und somit keine systemweite Obergrenze festgelegt werden kann. Ein Festlegen von individuellen Obergrenzen je IP-Endgerät würde dagegen den manuellen Konfigurationsaufwand stark erhöhen, insbesondere auch unter dem Gesichtspunkt, dass in einem IP-basierten Sprachkommunikationssystem die IP-Endgeräte häufig dynamisch an- und abgemeldet werden und sich somit häufig Konfigurationsänderungen im Sprachkommunikationssystem ergeben.

Das Dokument EP-A1-1 478 157 offenbart ein Kommunikationssystem, bei dem ein geschütztes Element bei Überlast infolge einer Ereignismeldung an eine Filtervorrichtung gefilterte Verbindungsanfragen zugewiesen bekommt. Das Dokument EP-A1-1 705 931 offenbart ein Kommunikationssystem, bei dem Verbindungen zu einer Rufnummer gezählt und mit einem gespeicherten Schwellwert verglichen werden. Bei Überschreiten des Schwellwertes wird eine Meldung an das anrufende Gerät ausgegeben. Die JP-A-2006 197111 offenbart ein System, bei dem die Anzahl der Verbindungsanfragen gemessen wird und mit einem Schwellwert verglichen wird.

Es ist Aufgabe der Erfindung ein Verfahren zur Vermeidung eines bei einem Kommunikationsendgerät auftretenden Speicher-Ressourcen-Mangels anzugeben.

Gelöst wird diese Aufgabe durch ein Verfahren zum Abwickeln von Signalisierungsverbindung gemäß Patentanspruch 1, eine Kommunikationsendeinrichtung gemäß Patentanspruch 9, eine Verbindungssteuerung gemäß Patentanspruch 10, sowie ein Kommunikationssystem gemäß Patentanspruch 11.

Vorteilhafte Ausführungsformen und Weiterbildungen der Erfindung sind in den abhängigen Ansprüchen angegeben.

Beim erfindungsgemäßen Verfahren zum Abwickeln von, eine - vorzugsweise paketorientierte und insbesondere IP-basierte - Kommunikationsendeinrichtung betreffenden Verbindungen, werden für jede in der Konmmunikationsendeinrichtung abzuwickelnde Verbindung Ressourcen, insbesondere Speicher-Ressourcen, der Kommunikationsendeinrichtung belegt. Aufgrund eines Initialisierens einer, durch die Kommunikationsendeinrichtung abzuwickelnden ersten Verbindung, wird bei Überschreiten einer kommunikationsendeinrichtungsspezifischen Ressourcenbelegungsobergrenze durch von der Kommunikationsendeinrichtung belegten bzw. zu belegenden Gesamt-Ressourcen als Summe von belegten Ressourcen aller bereits abgewickelten Verbindungen sowie belegter und zu belegender Ressourcen der ersten Verbindung, das Überschreiten der Ressourcenbelegungsobergrenze an eine, an die Kommunikationsendeinrichtung gekoppelte, Verbindungssteuerung durch die Kommunikationsendeinrichtung gemeldet. Infolge dieses Meldens wird durch die Verbindungssteuerung eine erste Anzahl der gleichzeitig abgewickelten Verbindungen in einem der Verbindungssteuerung zugeordneten Speicher gespeichert. Der abgespeicherte Wert repräsentiert somit einen Maximalwert von durch die Kommunikationsendeinrichtung maximal erfolgreich abzuwickelnden Verbindungen.

Bei Initialisieren einer, durch die Kommunikationsendeinrichtung abzuwickelnden zweiten Verbindung - die entweder zeitgleich zur bestehenden ersten Verbindung oder der ersten Verbindung nach deren Abbau zeitlich nachlaufend zum Aufbau ansteht -, wird durch die Verbindungssteuerung als zweite Anzahl eine Gesamtanzahl an gleichzeitig durch die Kommunikationsendeinrichtung abgewickelten und abzuwickelnden Verbindungen - d.h. die Gesamtheit aller ein- oder ausgehenden, gehaltenen oder sich im Aufbau befindenden Verbindungen, wobei in einem durchschnittlich belasteten Kommunikationssystem wohl lediglich die zweite Verbindung sich im Aufbau befindet und somit abzuwickeln ist - ermittelt. Bei Überschreiten der zweiten Anzahl gegenüber der gespeicherten ersten Anzahl unterbleibt ein Weiterleiten der zweiten Verbindung zum Abwickeln an der Kommunikationsendeinrichtung durch die Verbindungssteuerung. Bei Nicht-Überschreiten kann die Verbindung dagegen durch die Verbindungssteuerung an die Kommunikationsendeinrichtung ungehindert weitergeleitet werden, damit diese die Verbindung abwickeln kann.

Das Verfahren kann in eine Lernphase und in eine Aktivphase unterteilt werden, wobei sich die Lernphase dadurch auszeichnet, dass in dieser die erste Anzahl an Signalisierungsverbindungen ermittelt wird, wohingegen nach Speichern der ersten Anzahl die Lernphase beendet ist und die Aktivphase beginnt. In der Aktivphase wird für die folgenden Zeitabschnitte und vorzugsweise zeitlich unbegrenzt die zweite Anzahl an Signalisierungsverbindungen ermittelt und mit der - in der Lernphase ermittelten - ersten Anzahl verglichen.

Die Erfindung ist insbesondere vorteilhaft, als dass - ohne manuellen Konfigurationsaufwand von Maximalwerten von maximal gleichzeitig abzuwickelnden Verbindungen je Kommunikationsendeinrichtung - garantiert werden kann, dass lediglich höchstens einmal eine Signalisierungsverbindung aufgrund von Ressourcen-Mangel an der Kommunikationsendeinrichtung abgewiesen wird. Denn nach Erkennen der gleichzeitig maximal abzuwickelnden Signalisierungsverbindungen - also in der Aktivphase -, werden weitere Verbindungsversuche bereits durch die Verbindungssteuerung vorsorglich abgewiesen, so dass ein Ressourcen-Mangel an der Kommunikationsendeinrichtung nicht auftreten kann. Dabei kann vorzugsweise zwischen gehenden und kommenden Verbindungen unterschieden werden, so dass zur Kommunikationsendeinrichtung kommende Verbindungen bei Erreichen der gespeicherten ersten Anzahl abgewiesen werden, während für von der Kommunikationsendeinrichtung gehende Verbindungen keinerlei oder weniger strenge Schwellwerte vorgesehen sind. Dies ermöglicht es, für die Kommunikationsendeinrichtungen zu jedem Zeitpunkt genug Ressourcen für ein Absetzen eines Notrufs, für ein Durchführen einer Rückfrage bzw. Zweitanrufs oder für ein Initiieren einer Konferenz bereitzustellen, wobei die genannten Verbindungen von der Kommunikationsendeinrichtung abgehend sind. Auf diese Weise erfährt ein Benutzer der Kommunikationsendeinrichtung keinerlei Einschränkungen bzgl. der Verwendung von bereitstehenden Leistungsmerkmalen.

Die Speicherung der ersten Anzahl in dem der Verbindungssteuerung zugeordneten Speicher erweist sich insbesondere als vorteilhaft, als dass ein derartig gespeicherter Wert auch bei einem Rücksetzen oder Initialisieren der Kommunikationsendeinrichtung unverändert bleiben kann. Weiterhin kann die Verbindungssteuerung verzögerungsfrei auf den eingehenden Verbindungswunsch reagieren, so dass einem, die zweite Signalisierungsverbindung auslösenden Kommunikationspartner schnell eine Reaktion übermittelt werden kann. Darüber hinaus ist vorteilhaft, dass die Verbindungssteuerung üblicherweise ebenfalls Steuerungsaufgaben für weitere Endeinrichtungen übernimmt, so dass bei Erkennen der zweiten Signalisierungsverbindung bei der Verbindungssteuerung unverzüglich ein Weiterleiten der zweiten Signalisierungsverbindung an eine alternative Überlauf-Kommunikationsendeinrichtung oder an einen Ansagedienst durch die Verbindungssteuerung vollzogen werden kann, ohne dass die Kommunikationsendeinrichtung daran beteiligt wäre.

Ein weiterer Vorteil der Erfindung besteht darin, dass existierende Kommunikationsendeinrichtungen weitgehend unverändert verwendet werden können und auch ein existierendes Übertragungsprotokoll ohne Erweiterungen unverändert weiterverwendet werden kann.

Die Erfindung ermöglicht es, die von einer Kommunikationsendeinrichtung maximal abzuwickelnden bzw. zu bedienende Verbindungen zu ermitteln. Darüber hinaus wird durch die Erfindung erlaubt, eine Kommunikationsendeinrichtungs-Speicherausstattung zu bestimmen - und zwar nicht als absoluter Wert in kB oder MB (kB: Kilo-Byte; MB: Mega-Byte), sondern als eine Anzahl an durchzuführenden Verbindungen.

Unter Abwickeln einer Verbindung versteht man im Rahmen der Erfindung das Empfangen einer eingehenden Verbindung durch eine Einrichtung - beispielsweise die Kommunikationsendeinrichtung -, das protokollkonforme Reagieren auf eingehende Meldungen und das Aufrechterhalten der Verbindung durch die Einrichtung. Darüber hinaus versteht man unter Abwickeln auch das Aufbauen einer ausgehenden Verbindung mit der Einrichtung als auslösende Komponente und das Aufrecherhalten dieser Verbindung durch die Einrichtung, so dass durch das Abwickeln das Bedienen von jeglichen ein- und ausgehenden Verbindungen - evtl. eingeschränkt auf lediglich Signalisierungsverbindungen - verstanden werden kann.

Eine Kommunikationsendeinrichtung ist von einer Verbindung betroffen, wenn die Kommunikationsendeinrichtung ein Initiator einer ausgehenden Kommunikationsverbindung oder ein Ziel einer eingehenden Kommunikationsverbindung darstellt.

Unter Ressourcen versteht man insbesondere Speicher-Ressourcen wie den Freispeicher der Kommunikationsendeinrichtung, von dem zur Durchführung von Signalisierungs- und Nutzdatenverbindungen dynamisch Speicher als belegt reserviert wird, wobei bei Beendigung der Verbindungen der jeweilig reservierte Speicher wieder freigegeben wird. Darüber hinaus kann es sich bei den Ressourcen aber auch um die zur Verfügung stehenden CODECs (CODEC: coding / encoding) oder um eine Prozessorauslastung handeln.

Bei Betrachtung eines IP-Endgerätes als Kommunikationsendeinrichtung, dass mittels SIP-Methoden (SIP: Session Initiation Protocol) - gemäß dem von der Arbeitsgruppe IETF (Internet Engineering Task Force) entwickelten Protokoll SIP - mit der Verbindungssteuerung und weiteren IP-Endgeräten kommuniziert und zur Signalisierung auf das H.225-Protokoll zurückgreift, können unter den Ressourcen auch so genannte H.225-Instanzen in Kommunikationsendeinrichtung verstanden werden, die dynamisch für den Betrieb einer H.225-Signalisierungsverbindung durch die Kommunikationsendeinrichtung bereitgestellt werden. Eine Verbindungssteuerung kann in diesem paketbasierten Umfeld insbesondere ein so genannter Gatekeeper oder ein am Verbindungsaufbau beteiligter Gateway sein.

Die Ressourcen sind insbesondere kommunikationsendeinrichtungsindividuell und werden individuell von der Kommunikationsendeinrichtung verwaltet. Bei Betrachtung von Speicher-Ressourcen ist der Freispeicher bei IP-Telefonen üblicherweise als integraler Speicher des IP-Telefons ausgestaltet, während bei auf Arbeitsplatzrechnern ablaufenden so genannten Soft-Clients als Kommunikationsendeinrichtungen die Speicher-Ressourcen vom Arbeitsplatzrechner an den Soft-Client vergeben werden und evtl. abhängig von der Gesamtauslastung des Arbeitsplatzrechners ist.

Die Ressourcenbelegungsobergrenze ist für die Ressourcen beispielsweise als Prozentualwert der gesamt zur Verfügung stehenden Ressourcen definiert. So kann bei Speicher-Ressourcen die Ressourcenbelegungsobergrenze beispielsweise 80% des Gesamtumfangs des zur Verfügung stehenden dynamischen Speichers betragen. Zur Auswertung der Ressourcenbelegungsobergrenze gegenüber des Gesamtumfangs der Ressource kann einerseits die Belegung der Ressource oder andererseits der noch unbenutzte Anteil der Ressource ermittelt werden.

In einem Sonderfall kann die Ressourcenbelegungsobergrenze auch den gesamten zur Verfügung stehenden dynamischen Speicher der Kommunikationsendeinrichtung darstellen. Ein Überschreiten der Ressourcenbelegungsobergrenze kann in der Praxis nicht erfolgen, sondern nur ein Überschreiten der insgesamt belegten und angeforderten Speichermenge gegenüber dem zur Verfügung stehenden Speicher, da in einem solchen Fall üblicherweise ein als ,,out of memory" bezeichneter Fehler ausgelöst wird. Dieses Verhalten soll aber im Rahmen der Erfindung ebenfalls unter dem Begriff "Überschreiten" verstanden werden, so dass auch ein Ausgehen des verfügbaren Freispeichers - aufgrund Anforderung von Speicher, der über den physikalisch zur Verfügung stehenden Speicher hinausgeht - unter dem Wortlaut der Erfindung fällt.

Die belegten Gesamt-Ressourcen stellen die Summe von belegten Ressourcen aller bereits abgewickelten Verbindungen und weiterer Ressourcen für die erste Verbindung dar. Da beim Initialisieren der ersten Verbindung evtl. in mehreren Teilschritten Ressourcen reserviert werden, können die Gesamt-Ressourcen wiederholt nach jedem einzelnen Reservierungsvorgang bestimmt werden, so dass ein Überschreiten der Ressourcenbelegungsobergrenze ohne Verzögerungen erkannt wird. Unter ,,belegter und zu belegender Ressourcen der ersten Verbindung" sind insbesondere alle die erste Verbindung betreffende Ressourcen zu verstehen. Insbesondere ist darunter auch zu verstehen, dass ein Überschreiten der Ressourcenbelegungsobergrenze bereits bei einem Anfordern von zu belegenden Ressourcen erkannt werden kann, und eine umfassende Ressourcen-Belegung somit nicht mehr erforderlich wird oder durchgeführt werden kann.

Das erfindungsgemäße Melden der ersten Anzahl an die Verbindungssteuerung kann als Meldung mit der ersten Anzahl als Parameter ausgestaltet sein. Alternativ kann lediglich ein Überschreiten der Ressourcenbelegungsobergrenze gemeldet werden und die Verbindungssteuerung ermittelt selbständig die erste Anzahl durch Zählen der zu diesem Zeitabschnitt gleichzeitig bestehenden Verbindungen zur und von der Kommunikationsendeinrichtung.

Die erste Anzahl stellt kommunikationsendeinrichtungsindivduell die maximale Anzahl an gleichzeitig erfolgreich und fehlerfrei abzuwickelnden Verbindungen der Kommunikationsendeinrichtung dar. Sofern die Verbindungssteuerung Kommunikationsendeinrichtungen mittels kommunikationsendeinrichtungsindivduellen logischen Anschlussports verwaltet, kann die erste Anzahl durch die Verbindungssteuerung auch anschlussportspezifisch verwaltet werden.

"Kommunikationsendeinrichtungsindividuell" oder "Kommunikationsendeinrichtungsspezifisch" ist so zu verstehen, dass je durch die Verbindungssteuerung verwaltete Kommunikationsendeinrichtung ein Datensatz für die erste Anzahl angelegt und verwaltet wird.

Alternativ zur maximalen Anzahl an gleichzeitig erfolgreich und fehlerfrei abzuwickelnden Verbindungen kann die erste Anzahl aber auch eine Minimalanzahl darstellen, ab der die Ressourcenbelegungsobergrenze überschritten wird. Bei einer derartigen Ausgestaltung muss lediglich die Prüfung der zweiten Anzahl entsprechend angepasst werden, so dass bereits bei Übereinstimmung der zweiten Anzahl mit der gespeicherten ersten Anzahl, eine Weiterleitung der Verbindung zum Abwickeln an der Kommunikationsendeinrichtung durch die Verbindungssteuerung unterbleibt.

Dieses Unterbleiben der Weiterleitung der Verbindung durch die Verbindungssteuerung erlaubt es, eine Kommunikationsendeinrichtung nicht weiter durch eine eingehende Verbindung zu belasten, wenn bereits durch die Verbindungssteuerung erkannt wird, dass die Kommunikationsendeinrichtung die Verbindung nicht bedienen kann. Die Verbindungssteuerung kann somit determiniert die eingehende Verbindung ablehnen und evtl. an eine andere Kommunikationsendeinrichtung um- bzw. weiterleiten.

Die Verbindungssteuerung kann die erste Anzahl kommunikationsendeinrichtungsspezifisch ermitteln und auch kommunikationsendeinrichtungsspezifisch abspeichern. Alternativ kann der ermittelte Wert für eine Kommunikationsendeinrichtung eines bestimmten Endeinrichtungstyps auch für weitere Kommunikationsendeinrichtungen des identischen Endeinrichtungstyps gelten, so dass in diesem Fall eine endeinrichtungstypspezifische Speicherung erfolgen kann. Letzteres hat den Vorteil, dass der Verwaltungsaufwand in der Verbindungssteuerung niedrig gehalten bleiben kann und dass relativ schnell für alle Kommunikationsendeinrichtungen die jeweilige erste Anzahl bestimmt werden kann.

Bei Neu- oder Wiederanmeldung der Kommunikationsendeinrichtung bei der Verbindungssteuerung oder Initialisierung der Kommunikationsendeinrichtung kann vorzugsweise der Speicherwert der ersten Anzahl für die jeweilige Kommunikationsendeinrichtung in dem der Verbindungssteuerung zugeordneten Speicher auf einen Initialwert zurückgesetzt werden. Der Initialwert repräsentiert beispielsweise einen "ungültig"-Zustand der ersten Anzahl. Dies bewirkt, dass eine Ermittlung der zweiten Anzahl gemäß der Aktivphase nicht erfolgt, sondern dass erneut die Lernphase des erfindungsgemäßen Verfahrens ausgeführt wird, in der die erste Anzahl erneut bestimmt wird. Ein Überprüfen der zweiten Anzahl erfolgt nicht bzw. liefert dauerhaft ein negatives Prüfergebnis, so dass eine Weiterleitung der Verbindung zur Abwicklung an der bzw. durch die Kommunikationsendeinrichtung durch die Verbindungssteuerung bedingungslos erfolgt. Erst wenn erneut die erste Anzahl bestimmt ist, ist die Lernphase beendet und kann die Überprüfung der zweiten Anzahl in der Aktivphase durchgeführt werden.

Vorteilhafterweise wird die Ressourcenbelegungsobergrenze derart konfiguriert, dass alle bereits bestehenden Verbindungen fehlerfrei abgewickelt werden können. Darüber hinaus kann in einer vorteilhaften Weiterbildung der Erfindung die Ressourcenbelegungsobergrenze derart festgelegt werden, dass bei Erreichen bzw. Überschreiten der Ressourcenbelegungsobergrenze für die abgewickelten Verbindungen, genügend Ressourcen für ein erfolgreiches Abwickeln einer weiteren Verbindung - eine Signalisierungs- oder Nutzdatenverbindung - durch die Kommunikationsendeinrichtung zur Verfügung stehen. Somit kann beispielsweise sichergestellt werden, dass ein Notruf oder eine Rückfrage, ausgehend von der Kommunikationsendeinrichtung weiterhin problemlos durchgeführt werden kann. Auf diese Weise wird der Teilnehmer der Kommunikationsendeinrichtung nicht im Arbeitsablauf eingeschränkt, da er zu jedem beliebigen Zeitpunkt Leistungsmerkmale wie Konferenzschaltungen auslösen kann, ohne dass die Ausführung des Leistungsmerkmals aufgrund von Ressourcen-Mangels abgewiesen würde. Ein für den Benutzer nicht nachvollziehbares Verhalten, dass zeitweise bestimmte Leistungsmerkmale nicht ausführbar sind, kann somit verhindert werden.

Zum Bestimmen von Ressourcen-Grenzwerten für genügende Ressourcen und somit auch der Ressourcenbelegungsobergrenze kann beispielsweise eine Simulation oder ein Testverfahren durchgeführt werden, bei dem verschiedene Verbindungssituationen einer Kommunikationsendeinrichtung durchgetestet werden können. Somit lässt sich bestimmen, wie viele Speicher-Reserven eine Kommunikationsendeinrichtung zur bestimmungsgemäßen Durchführung von Leistungsmerkmalen benötigt.

In einer vorteilhaften Ausführungsform der Erfindung kann bei erfolgreichen Initialisieren einer abzuwickelnden Verbindung ein eine Anzahl an gleichzeitig erfolgreich bedienten und abgewickelten Verbindungen anzeigender erster Zähler der Kommunikationsendeinrichtung - vorzugsweise durch die Verbindungssteuerung - inkrementiert und bei Abbau der ersten Verbindung dekrementiert werden. Auf diese Weise kann - repräsentiert durch den ersten Zähler - in der Lernphase in der Verbindungssteuerung durchgehend je Kommunikationsendeinrichtung die Anzahl an durch die Kommunikationsendeinrichtung erfolgreich abgewickelten Verbindungen bestimmt werden, so dass bei Überschreiten der Ressourcenbelegungsobergrenze einfach der Wert des ersten Zählers als Wert der erfindungsgemäßen ersten Anzahl gesetzt werden kann.

Auf ähnliche Weise - durch Inkrementieren und Dekrementieren eines eine Anzahl an gleichzeitig erfolgreich bedienten und abgewickelten Verbindungen anzeigenden zweiten Zählers - kann in einer weiteren vorteilhaften Ausführungsform in der Aktivphase das Überschreiten der ersten Anzahl durch die zweite Anzahl somit durch einen einfachen Zählervergleich zwischen dem Wert des zweiten Zählers und der gespeicherten ersten Anzahl, vorzugsweise durch die Verbindungssteuerung, ermittelt werden.

Weiterhin kann in einer Weiterbildung der Erfindung bei Verwaltung von kommunikationsendeinrichtungsspezifischen Warteschlangen die erste Anzahl dazu verwendet werden, um die maximale Anzahl an Warteplätzen in der Warteschlange der jeweiligen Kommunikationsendeinrichtung zu konfigurieren. Somit kann garantiert werden, dass nicht versucht wird eingehende Anrufe in eine Warteschlange aufzunehmen, obwohl die Kommunikationsendeinrichtung nicht in der Lage ist, die sich ergebene Anzahl an Anrufen in der Warteschlange aufgrund von Ressourcenbeschränkungen zu bedienen.

In einer derartigen Warteschlange befinden sich beispielsweise von der Kommunikationsendeinrichtung gehaltene Verbindungen oder sich im Rufzustand befindende und an die Kommunikationsendeinrichtung gerichtete Verbindungen. Vorteilhafterweise kann bei Erreichen der Maximalanzahl an Warteplätzen, ein weiterer eingehender Anruf zur Kommunikationsendeinrichtung an eine weitere Kommunikationsendeinrichtung umgeleitet werden.

In einer weiteren vorteilhaften Weiterbildung der Erfindung, kann bei Überschreiten oder bereits bei Annäherung der zweiten Anzahl gegenüber der gespeicherten ersten Anzahl, durch die Verbindungssteuerung zumindest ein Leistungsmerkmal - vorzugsweise alle deutlich ressourcen-belastenden Leistungsmerkmale - der Kommunikationsendeinrichtung abgewiesen wird. Somit können Leistungsmerkmale, die sich durch großen Ressourcenbedarf auszeichnen, durch die Kommunikationsendeinrichtung oder durch die Verbindungssteuerung gesperrt werden. Hierbei kann beispielsweise zusätzlich eine Unterscheidung nach Prioritäten von Leistungsmerkmalen durchgeführt werden, so dass niederpriore Leistungsmerkmale - beispielsweise ein Umkonfigurieren von Klingeltönen - bereits bei Erreichen der ersten Anzahl abgewiesen werden können. Leistungsmerkmale mit mittlerer Priorität können beispielsweise bei Überschreiten der ersten Anzahl abgewiesen werden, während hochpriore Leistungsmerkmale - insbesondere ein Absetzen eines Notrufs - ungehindert ausgeführt werden können, unabhängig von der Auswertung der zweiten Anzahl gegenüber der ersten Anzahl.

Ein Ausführungsbeispiel der Erfindung wird nachfolgend an Hand einer Zeichnung näher erläutert.

Dabei zeigen in schematischer Darstellung
- Figur 1: ein Kommunikationssystem mit abgewickelten und abzuwickelnden Verbindungen für eine Kommunikationsendeinrichtung in einer Lernphase des erfindungsgemäßen Verfahrens,
- Figur 2: ein Kommunikationssystem mit abgewickelten und abzuwickelnden Verbindungen für eine Kommunikationsendeinrichtung in einer Aktivphase des erfindungsgemäßen Verfahrens, und
- Figur 3-5: Ablaufdiagramme für eine Verbindungssteuerung zur Abwicklung einer Lern- und einer Aktivphase gemäß des erfindungsgemäßen Verfahrens.

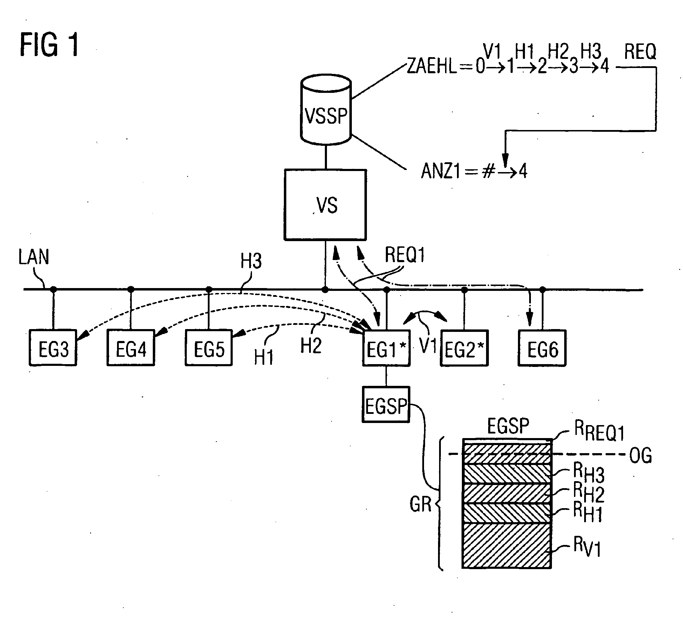

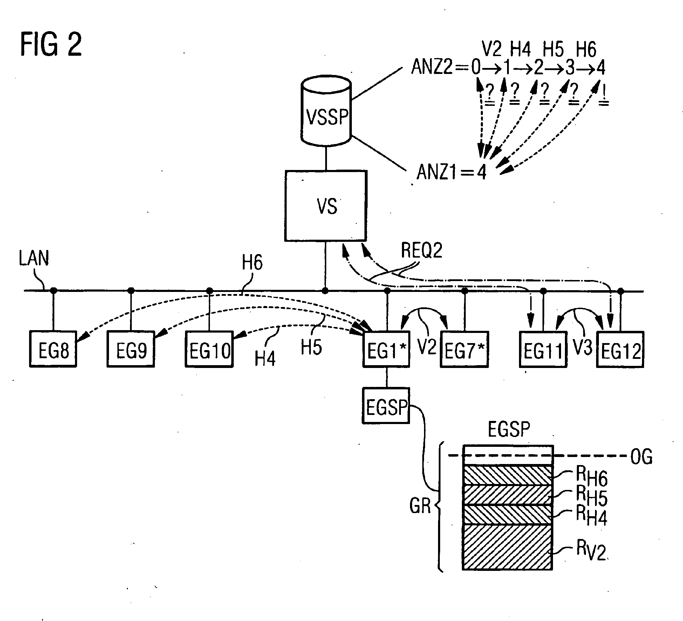

In den Figuren 1 und 2 ist ein paketbasiertes Kommunikationssystem schematisch dargestellt bei dem IP-Telefone EG1 bis EG12 als Kommunikationsendeinrichtungen über ein lokales Netzwerk LAN mit einer Verbindungssteuerung VS gekoppelt sind. Die Verbindungssteuerung VS ist vorzugsweise ein so genannter Gatekeeper oder eine andere, an einem jeweiligen Verbindungsaufbau beteiligte Komponente. Weitere, üblicherweise in einem LAN befindliche Komponenten sind aus Übersichtlichkeitsgründen in den Figuren 1 und 2 nicht näher dargestellt. Die Tatsache, dass alle dargestellten Telefone EG1 bis EG12 als IP-Telefone ausgestaltet und im selben lokalen Netzwerk LAN angeordnet sind, stellt ebenfalls nur eine Vereinfachung in der Darstellung dar, um den Erfindungsgedanken anschaulicher darstellen zu können.

Die IP-Telefone EG1 bis EG12 sowie die Verbindungssteuerung VS umfassen jeweils einen Speicher bzw. haben Zugriff auf einen jeweiligen Speicher. In den Figuren 1 und 2 ist deshalb ein mit der Verbindungssteuerung VS gekoppelter Verbindungssteuerungsspeicher VSSP dargestellt, sowie ein Telefonspeicher EGSP des ersten IP-Telefons EG1, wobei auf eine Darstellung der Speichereinrichtungen der weiteren IP-Telefone EG2 bis EG12 verzichtet wird.

Darüber hinaus werden in den Figuren 1 und 2 neben der reinen Darstellung des Netzwerks und dessen Komponenten weiterhin Verbindungen zwischen den Komponenten als Doppelpfeile angedeutet, wobei es sich bei, mit dem Bezugszeichen Hx (also H1, H2, H3, ...) versehenen Verbindungen um Signalisierungsverbindungen handelt, die sich im Haltezustand befinden - dargestellt durch gestrichelte Doppelpfeile zwischen den Endpunkten der Verbindung. Darüber hinaus wird mit dem Bezugszeichen Vx (also V1 oder V2) eine aufgebaute Verbindung mit Signalisierungs- und Nutzdatenanteil bezeichnet, dargestellt als durchgezogener Doppelpfeil zwischen den Endpunkten der Verbindung, wobei die Endpunkte der aktiven und aufgebauten Verbindung zusätzlich durch einen Stern (*) markiert sind. Darüber hinaus wird eine Meldung oder eine Signalisierungsverbindung zum Zweck eines Rufaufbaus als Rufaufbauanforderung mit einem Kurzzeichen REQ1 bzw. REQ2 bezeichnet und als strichpunktierter Doppelpfeil dargestellt.

Verbindungen sind im vorliegenden Ausführungsbeispiel beispielsweise Sprachverbindungen gemäß H.323 oder SIP (Session Initiation Protocol). Signalisierungsverbindungen erfolgen insbesondere gemäß H.225, wobei zur Verwaltung einer aufgebauten Verbindung die IP-Telefone EG1, EG2, ... je Signalisierungsverbindung eine so genannte H.225-Instanz erzeugen. Zur Erzeugung einer solchen H.225-Instanz werden dazu benötigte Speicher-Ressourcen im jeweilig zugeordneten Endgerätespeicher reserviert.

Weiterhin ist in den Figuren 1 und 2 eine Wertebelegung des Verbindungssteuerungsspeichers VSSP für die Speicherzellen eines Zählers ZAEHL, einer ersten Anzahl ANZ1 und einer zweiten Anzahl ANZ2 angedeutet, wobei es sich bei diesen drei Speicherzellen um Speicherzellen des Verbindungssteuerungsspeichers VSSP individuell für das erste IP-Telefon EG1 handelt. Für weitere IP-Telefone seien ebenfalls jeweils derartige Speicherzellen vorgesehen - nicht dargestellt.

Zusätzlich ist eine Speicheraufteilung des Telefonspeichers EGSP des ersten IP-Telefons EG1 als maximal zur Verfügung stehende Maximal-Ressourcen GR durch ein Rechteck veranschaulicht, in dem der belegte Speicher anteilsmäßig je Verbindung Hx, Vx, REQ1 durch eine schraffierte Fläche angedeutet ist, wobei die Speicherbelegung von unten nach oben angetragen ist und freier, zur Verfügung stehender Speicher als weißes Rechteck zu erkennen ist. Eine Ressourcenbelegungsobergrenze OG ist durch eine gestrichelte Linie dargestellt.

Als Ressourcen im Sinne der Erfindung werden nachfolgend Speicherressourcen des üblicherweise als RAM (Random Access Memory) bezeichneten Schreib-/Lesespeichers des ersten IP-Telefons EG1 betrachtet. Es sei darauf hingewiesen, dass im Rahmen des Ausführungsbeispiels lediglich Ressourcen und Speicherbelegungen des ersten IP-Telefons EG1 betrachtet werden. Auf ebenfalls auftretende Ressourcenbelegungen der übrigen IP-Telefone EG2, EG3, ... wird nicht eingegangen, wobei die Erfindung für diese analog anzuwenden ist.

Ressourcenbelegungen, die einzelnen Verbindungen zugeordnet werden können, werden in den Figuren 1 und 2 mit dem Bezugszeichen R bezeichnet, wobei die, die Ressourcenbelegung auslösende Verbindung dem Bezugszeichen R tiefgestellt angegeben ist (also z.B. R_{V1} für die Verbindung V1).

Ausgangssituation für Figur 1 sei ein Ruhezustand für alle in der Figur dargestellten IP-Telefone EG1 bis EG6, beispielsweise nach Neuinitialisierung des ersten IP-Telefons EG1 oder nach Neuanmelden des ersten IP-Telefons EG1 bei der Verbindungssteuerung VS. Verbindungen seien zu diesem Ausgangszeitpunkt keine aufgebaut. Der Zähler ZAEHL, der eine Anzahl an gleichzeitig aufgebauten Verbindungen zum bzw. vom ersten IP-Telefon EG1 anzeigt, sei null. Der Wert für die erste Anzahl ANZ1 sein "nicht definiert", was in der Figur durch das Zeichen "#" angedeutet ist und in einer realen Implementierung beispielsweise "-1" sein kann. Die erste Anzahl ANZ1 repräsentiert hierbei - sofern ungleich dem Wert "#" - die maximale Anzahl an gleichzeitig, erfolgreich durch das erste IP-Telefon EG1 zu bedienenden Verbindungen, wobei der entsprechende Wert im Folgenden in einer Lernphase ermittelt werden soll. Der für Verbindungen zu verwendende Anteil des Telefonspeichers EGSP des ersten Telefons EG1 sei zum Ausgangszeitpunkt unbenutzt bzw. frei.

Nachfolgend werden Verbindungen zum bzw. vom ersten IP-Telefon EG1 aufgebaut. Diese, das erste IP-Telefon EG1 betreffende Verbindungen benötigen Speicherplatz im Endgerätespeicher EGSP. Bei jedem Verbindungsaufbau wird der benötigte Speicherplatz im Endgerätespeicher EGSP mit einer Ressourcenbelegungsobergrenze OG verglichen, die im vorliegenden Ausführungsbeispiel beispielsweise 80% des maximal zur Verfügung stehenden Endgerätespeichers EGSP sei.

Als erstes wird eine Verbindung V1 zwischen dem ersten IP-Telefon EG1 und dem zweiten IP-Telefon EG2 aufgebaut. Eine beispielsweise vom zweiten IP-Telefon EG2 ausgehende Verbindungsanfrage wird zur Verbindungssteuerung VS übermittelt - nicht dargestellt. Diese prüft, ob die erste Anzahl ANZ1 bereits gesetzt ist und falls ja, ob der Wert durch die aktuelle Anzahl an gleichzeitig bestehenden Verbindungen zum ersten Telefon EG1 bereits den Wert der ersten Anzahl ANZ1 überschreitet. Falls dies der Fall wäre, würde die Weiterleitung der Verbindungsanfrage unterbleiben und durch die Verbindungssteuerung VS gezielt geblockt. Da die erste Anzahl ANZ1 aber zum vorliegenden Zeitpunkt auf den Initialwert "#" gesetzt ist, erfolgt kein Blockieren, sondern die Verbindungssteuerung VS lenkt die Verbindungsanfrage weiter zum ersten IP-Telefon EG1 - nicht dargestellt.

Aufgrund der eingehenden, über die Verbindungssteuerung VS laufenden Verbindungsanfrage, wird im ersten IP-Telefon EG1 eine H.225-Instanz zum Betreiben einer H.225-Signalisierungsverbindung zwischen dem ersten und dem zweiten IP-Telefon EG1, EG2 erzeugt, und ein entsprechender Speicherbereich als Ressource R_{V1} im Telefonspeicher EGSP reserviert. Bei der Reservierung des Speichers wird geprüft, ob durch die Reservierung bereits die Ressourcenbelegungsobergrenze OG überschritten wird bzw. wurde. Ist dies, wie im vorliegenden Ausführungsbeispiel angenommen, nicht der Fall, erfolgt eine Bestätigungsmeldung an die Verbindungssteuerung VS sowie an das zweite IP-Telefon EG2.

Aufgrund des Erhalts der positiven Bestätigungsmeldung erhöht die Verbindungssteuerung VS in ihrem Speicher die Anzahl an durch das erste IP-Telefon EG1 gleichzeitig betriebenen Verbindungen - repräsentiert durch den Zähler ZAEHL - von null auf eins. Dies ist in Figur 1 als Pfeil von 0 auf 1 angedeutet, wobei das auslösende Ereignis - Verbindungsaufbauwunsch für eine Verbindung V1 - über den Pfeil angetragen ist.

Das erste und das zweite IP-Telefon EG1, EG2 können daraufhin die Verbindung annehmen und eine zugehörige Nutzdatenverbindung aufbauen, wobei dazu evtl. erneut Speicher im Telefonspeicher EGSP angefordert wird. Es ergibt sich somit eine direkte Verbindung V1 zwischen dem ersten IP-Telefon EG1 und dem zweiten IP-Telefon EG2. Der für die Verbindung V1 benötigte Speicher ist in Figur 1 als eine rechteckige Schraffur mit der Bezeichnung V1 anteilsmäßig vom Telefonspeicher EGSP schematisch angetragen.

Das Kommunikationssystem befindet sich nun in einem Zustand mit einer aufgebauten Verbindung zwischen den IP-Telefonen EG1 und EG2. Weitere relevante Verbindungen existieren zu diesem Zeitpunkt nicht. Falls nun - nicht weiter dargestellt - die Verbindung V1 beendet würde, würde IP-Telefon EG1 den - als Ressourcen R_{V1} angetragenen - zugehörig reservierten Speicher wieder freigegeben und die Verbindungssteuerung VS würde den Zähler ZAEHL um eins auf null heruntersetzen.

Zur Fortsetzung der Erläuterung der Erfindung bleibt die Verbindung V1 aber weiter bestehen und das erste und das zweite IP-Telefon EG1, EG2 bleiben aktiv - jeweils durch einen Stern (*) beim Bezugszeichen EG1 und EG2 angedeutet.

Erfolgt nun, während die Verbindung V1 besteht, ein weiterer Verbindungsaufbauversuch vom IP-Telefon EG5 zum ersten IP-Telefon EG1, so wird aufgrund der bei der Verbindungssteuerung VS eingehenden Signalisierung durch die Verbindungssteuerung VS die Gültigkeit der ersten Anzahl ANZ1 geprüft. Da diese weiterhin auf den Wert "#" gesetzt ist, wird der Verbindungsaufbauwunsch weiter ans erste IP-Telefon EG1 geleitet. In diesem wird erneut eine H.225-Instanz aufgebaut, um eine Signalisierungsverbindung H1 zwischen dem ersten IP-Telefon EG1 und dem IP-Telefon EG5 aufzubauen. In diesem Zusammenhang wird ebenfalls Speicher als Ressource R_{H1} für die weitere H.225-Instanz im Telefonspeicher EGSP durch das erste Telefon EG1 angefordert. Dabei wird die Summe aller Speicherbelegungen für die bereits belegte Verbindung V1 und die belegte und zu belegende Speicherressourcen für die Signalisierungsverbindung H1 ermittelt und diese Gesamt-Ressourcen - also R_{V1}+R_{H1} - werden mit der Ressourcenbelegungsobergrenze OG verglichen um ein Überschreiten der Ressourcenbelegungsobergrenze OG zu erkennen. Ein Überschreiten sei im vorliegenden Fall nicht gegeben, so dass das erste IP-Telefon EG1 eine positive Quittung an die Vermittlungssteuerung VS und an das IP-Telefon EG5 übermittelt, wobei erstgenannte daraufhin den Zähler ZAEHL an gleichzeitig aktiven Verbindungen des ersten IP-Telefons EG1 von eins auf zwei hoch setzt.

Es sei nun angenommen, dass durch das IP-Telefon EG5 die Signalisierungsverbindung H1 aufrechterhalten wird, beispielsweise durch Einlegen eines Rückruf-Leistungsmerkmals auf das erste IP-Telefon EG1. Somit sei die nun gegebene Ausgangssituation eine aktive aufgebaute Verbindung V1 und eine gehaltene Signalisierungsverbindung H1, beide gerichtet an das erste IP-Telefon EG1.

Im Zeitverlauf folgend, wird nun vom IP-Telefon EG4 ein Verbindungsaufbauwunsch an das erste IP-Telefon EG1 ausgelöst, wobei analog zu den vorgenannten Schritten ein Speicherbereich als Ressourcen R_{H2} im Endgerätespeicher EGSP reserviert wird - es sei angenommen, das erneut die Ressourcenbelegungsobergrenze OG nicht überschritten wird, da R_{V1}+R_{H1}+R_{H2}<OG - und der Zähler ZAEHL um den Wert eins auf drei inkrementiert wird. Eine Signalisierungsverbindung H2 zwischen den IP-Telefonen EG1 und EG4 wird etabliert.

Analog dazu wird eine weitere Signalisierungsverbindung H3 aufgebaut, wobei in diesem Rahmen erneut Ressourcen - diesmal als R_{H3} bezeichnet - im Telefonspeicher EGSP reserviert wird, erneut die Ressourcenbelegungsobergrenze OG nicht überschritten wird (R_{V1}+R_{H1}+R_{H2}+R_{H3}<OG), und der Zähler ZAEHL um den Wert eins auf vier inkrementiert wird.

Im Folgenden wird vom sechsten IP-Telefon EG6 die Rufaufbauanforderung REQ1 als erfindungsgemäße erste Verbindung an die Verbindungssteuerung VS geschickt, mit dem Ziel eine weitere Verbindung zum ersten IP-Telefon EG1 aufzubauen. Die Verbindungssteuerung VS leitet die Rufaufbauanforderung REQ1 an das erste IP-Telefon EG1 weiter. Erneut wird durch das erste IP-Telefon EG1 versucht die nötigen Ressourcen R_{REQ1} für eine weitere H.225-Instanz zur Verfügung zu stellen. Bei Reservierung aller oder Teile der benötigten Speicherressourcen R_{REQ1} erfolge nun ein Überschreiten der Ressourcenbelegungsobergrenze OG. Die Summe aller belegten Gesamt-Ressourcen R_{V1}+R_{H1}+R_{H2}+R_{H3}+R_{REQ1} für die bereits aufgebauten Verbindungen V1, H1, H2, H3 und die nun aufgrund der Rufaufbauanforderung REQ1 zusätzlich benötigten oder bereits reservierten Speicherressourcen übertrifft den Wert der Ressourcenbelegungsobergrenze OG. Dies wird vom ersten IP-Telefon EG1 erkannt. Weiterhin werden bereits aufgrund der Rufaufbauanforderung REQ1 angelegte Ressourcen R_{REQ1} wieder freigegeben und eine negative Quittung an die Verbindungssteuerung VS übermittelt - nicht näher dargestellt. Mittels dieser negativen Quittung kann das erste IP-Telefon EG1 ein Überschreiten der Ressourcenbelegungsobergrenze OG an die Verbindungssteuerung VS melden. Ausgelöst durch diese Meldung wird durch die Verbindungssteuerung VS im Verbindungsteuerungsspeicher VSSP die erste Anzahl ANZ1 auf den bisherigen Zählerstand ZAEHL gesetzt, also den Wert vier. Die erste Anzahl ANZ1 repräsentiert dabei die maximal erlaubte Anzahl an gleichzeitig zu bedienenden Verbindungen bzw. die gleichzeitig zu betreibenden H.225-Instanzen des ersten IP-Telefons EG1. Der Wert für die erste Anzahl ANZ1 wird dauerhaft gespeichert, vorzugsweise zusätzlich zum Verbindungssteuerungsspeicher VSSP in einem nichtflüchtigen Speicher.

Der Wert des Zählers ZAEHL kann nun als Belegung der zweiten Anzahl ANZ2 verwendet werden, der für die folgende Aktivphase dazu verwendet wird, bereits durch die Verbindungssteuerung VS einen zu hohen Ressourcenbedarf durch das erste IP-Telefon EG1 verhindern zu können.

Hiermit ist die Lernphase des Verfahrens beendet. Die Aktivphase des Verfahrens beginnt. Kennzeichen der Lernphase war das Ermitteln des Werts für die erste Anzahl ANZ1. Kennzeichen der Aktivphase ist es nun bei jedem Verbindungsaufbaugesuch eine Anzahl an gleichzeitig verwalteten Verbindungen mit der ersten Anzahl ANZ1 zu vergleichen. Die Aktivphase wird nachfolgend an Hand Figur 2 näher erläutert.

Ausgangssituation für Figur 2 sei wiederum, dass sich alle vorhandenen IP-Telefone - in Figur 2 sind dies EG1, EG8, EG9, EG10, EG11, EG12 - in einem Ruhezustand befinden. Für das erste IP-Telefon EG1 wurde, wie vorstehend erläutert, für die ersten Anzahl ANZ1 der Wert ANZ1=4 ermittelt. Der Zähler für die zweite Anzahl ANZ2 sei 0.

Nun werden nacheinander verschieden Verbindungen zum ersten IP-Telefon EG1 aufgebaut. Als erstes erfolgt ein Verbindungsgesuch zwischen dem ersten IP-Telefon EG1 und dem siebten IP-Telefon EG7. Durch die Verbindungssteuerung wird geprüft, ob die zweite Anzahl ANZ2 bereits den Wert der ersten Anzahl ANZ1 erreicht hat und ob ein weiterer Verbindungsaufbau die ersten Anzahl ANZ1 überschreiten würde. Dieser Vergleich ist in Figur 2 durch ein Gleichheitszeichen mit einem darüber stehenden Fragezeichen angedeutet. ANZ2 ist 0 und ANZ1 ist 4, somit ist die zweite Anzahl ANZ2 kleiner der ersten Anzahl ANZ1. Durch dieses Ergebnis leitet die Verbindungssteuerung VS Meldungen im Rahmen des Verbindungsaufbaus ungehindert weiter, so dass sich als Endergebnis eine aktive Verbindung V2 zwischen den IP-Telefonen EG1 und EG7 ergibt. Die zweite Anzahl ANZ2 wird durch die Verbindungssteuerung VS nun um eins inkrementiert. EG1 und EG7 sind in Figur 2 analog zur Darstellung in Figur 1 als aktive Teilnehmer einer Verbindung mit einem Stern (*) gekennzeichnet. Im Telefonspeicher EGSP ist zu diesem Zeitpunkt ebenfalls ein Speicherbereich für die Verbindung V2 als Ressourcen R_{V2} reserviert. Die Gesamtbelegung aller Verbindungen - also zu diesem Zeitpunkt lediglich Verbindung V2 - ist deutlich unterhalb der Ressourcenbelegungsobergrenze OG.

Nun werden im Folgenden weitere Verbindungen H4, H5, H6 aufgebaut, was sich beispielsweise aufgrund von Anrufen zum ersten IP-Telefon EG1, durch Halten von aktiven Verbindungen oder durch Aktivieren einer Rückruf-Funktionalität ergeben kann. Beim Aufbau der weiteren Verbindungen H4, H5, H6 wird jeweils in der Verbindungssteuerung VS überprüft, ob der im Verbindungssteuerungsspeicher VSSP gespeicherte Wert von ANZ1 durch die Anzahl an gleichzeitig aktiven oder gehaltenen Verbindungen zum ersten IP-Telefon EG1 bereits erreicht oder überschritten wird. Dies ist bei Aufbau von H4 nicht der Fall, da ANZ2=1 und ANZ1=4. Die Verbindungssteuerung VS erlaubt den Verbindungsaufbau für die Verbindung H4 zwischen den IP-Telefonen EG10 und EG1. Weiterhin erhöht die Verbindungssteuerung den Wert von ANZ2 um eins auf zwei. Im Telefonspeicher EGSP werden die Ressourcen R_{H4} reserviert bzw. belegt.

Auf analoge Weise werden nun die Verbindung H5 zwischen den IP-Telefonen EG9 und EG1 und die Verbindung H6 zwischen den IP-Telefonen EG8 und EG1 aufgebaut, wobei sich der Wert von ANZ2 für die Verbindung H5 auf die Zahl 3 und für die Verbindung H6 auf die Zahl 4 erhöht. Es ergibt sich damit also die Situation, dass die zweite Anzahl ANZ2 gleich der ersten Anzahl ANZ1 ist. Weiterhin erfolgt eine Belegung der Ressourcen R_{H5} und R_{H6} im Telefonspeicher EGSP.

Im Fall eines weiteren Verbindungsaufbauversuchs durch das IP-Telefon EG11 für eine Verbindung zum ersten IP-Telefon EG1, wird eine Rufaufbauanforderung REQ2 als erfindungsgemäße zweite Verbindung an die Verbindungssteuerung VS übermittelt. Die Verbindungssteuerung VS vergleicht erneut die Werte von ANZ2 und ANZ1 und erkennt eine Übereinstimmung der Werte, bzw. falls die Verbindungssteuerung VS das Verbindungsgesuch akzeptieren würde, würde der Wert von ANZ2 den Wert von ANZ1 übersteigen. Dies wird nun von der Verbindungssteuerung VS erkannt. Ein Weiterleiten der Rufaufbauanforderung REQ2 an das ersten IP-Telefon EG1 unterbleibt bzw. wird unterdrückt, da ansonsten die Gesamtspeicherbelegung für alle betriebenen Verbindungen die Ressourcenoberbelegungsgrenze OG im Telefonspeicher EGSP überschritten würde.

Die Verbindungssteuerung VS kann somit einen Verbindungsversuch rechtzeitig - vor einer Erschöpfung der Speicher-Ressourcen - abweisen, so dass dem ersten IP-Telefon EG1 stets genug freie Speicher-Ressourcen zur Verfügung stehen. Im vorliegenden Beispiel sind somit Speicherbereiche für die Verbindungen V2, H4, H5, H6 reserviert - also R_{V2}, R_{H4}, R_{H5}, R_{H6} -, doch die Summe dieser Ressourcen ist weiterhin unterhalb der Ressourcenoberbelegungsgrenze OG. Somit bleibt dem IP-Telefon EG1 genügend Speicher zur Verfügung, um weitere Aktionen durchzuführen, wie beispielsweise einen Notruf abzusetzen, eine Rückfrage einzuleiten oder eine Konferenz zu initiieren.

Dem anrufenden und derart abgewiesenen IP-Telefon EG11 kann durch die Verbindungssteuerung VS beispielsweise eine Ansage zugeleitet werden, die ihn auffordert, den Ruf zu einem späteren Zeitpunkt zu wiederholen - nicht dargestellt. Alternativ und dargestellt in Figur 2, kann der Ruf auch nach in der Verbindungssteuerung VS zur Verfügung stehenden Regeln einem weiteren, weniger belasteten Teilnehmer zugeführt werden. Dies sei im vorliegenden Beispiel das IP-Telefon EG12, zu dem daraufhin von der Verbindungssteuerung VS die Rufaufbauanforderung REQ2 weitergeleitet wird.

Vorzugsweise werden in Ausgestaltungen des Verfahrens anstehende, gehaltene, aktive oder ausgehende Verbindungen gleichermaßen behandelt, sofern für diese ebenfalls Ressourcen in der betrachteten Kommunikationsendeinrichtung angelegt werden.

In einer Erweiterung des Verfahrens lassen sich zusätzlich Verfahrensschritte vorsehen, bei denen trotz Durchführung des oben genannten Verfahrens in der Aktivphase ein Überlauf der Speicher-Ressourcen über die Ressourcenbelegungsobergrenze OG ergeben kann. Dies kann in realen Kommunikationssystemen passieren, wenn beispielsweise eine einmal angelegt H.225-Instanz in einer Kommunikationsendeinrichtung nicht wieder abgebaut werden kann. Sollte somit die Prüfung auf Überschreiten der zweiten Anzahl ANZ2 zur ersten Anzahl ANZ1 kein Überschreiten festgestellt haben, während anschließend die Kommunikationsendeinrichtung den Rufaufbau wegen mangelnder Ressourcen ablehnt, so kann durch die Verbindungssteuerung VS ein Merker im Verbindungssteuerungsspeicher VSSP gesetzt werden, dessen Auswertung zu einem definierten Zeitpunkt ein Neuinitialisieren der Kommunikationsendeinrichtung bewirkt.

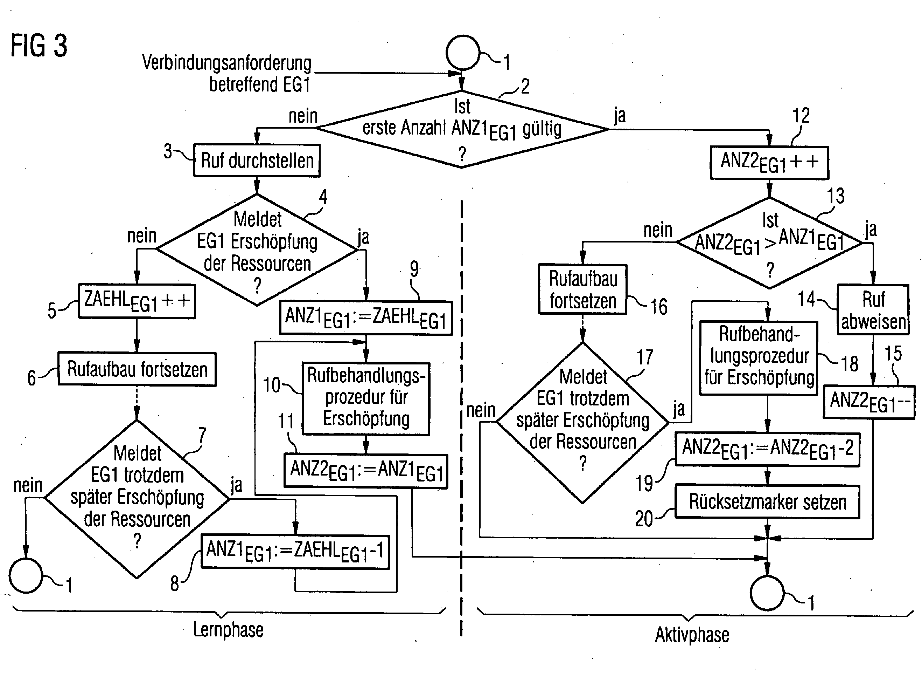

Ein derartiges Vorgehen wird zusammen mit den grundlegenden aus den Figuren 1 und 2 bekannten Verfahrensschritten mittels der Figuren 3-5 weitergehend erläutert.

Die Figuren 3-5 sind Ablaufdiagramme zur Darstellung von wesentlichen Verfahrensschritten einer Verbindungssteuerung, wie die aus den Figuren 1 und 2 bekannte Verbindungssteuerung VS.

Figur 3 betrifft die Verfahrensschritte die innerhalb der Lern- und der Aktivphase bei Erkennen eines Verbindungswunsches zu oder von einer Kommunikationsendeinrichtung durch eine Verbindungssteuerung ausgeführt werden. Ausgehend von einem beliebigen eingenommenen Zustand 1 trifft bei der Verbindungssteuerung eine die Kommunikationsendeinrichtung EG1 betreffende Verbindungsaufbauanforderung ein. Dies ist beispielsweise ein an die Kommunikationsendeinrichtung EG1 gerichteter Rufaufbauwunsch oder ein von der Kommunikationsendeinrichtung EG1 ausgehende Verbindungsanfrage. Als erstes wird durch die Verbindungssteuerung geprüft, ob bereits eine erste Anzahl ANZ1_{EG1} für die der Kommunikationsendeinrichtung EG1 einen gültigen Wert besitzt - Abfrage 2. ANZ1_{EG1} entspricht dabei ANZ1 aus den Figuren 1 und 2. Besitzt ANZ1_{EG1} keinen gültigen Wert, werden für die Kommunikationsendeinrichtung EG1 Verfahrensschritte der Lernphase abgearbeitet, ansonsten der Aktivphase.

Angenommen die Prüfung der ersten Anzahl ANZ1_{EG1} ergibt, dass die erste Anzahl ANZ1_{EG1} ungültig bzw. noch nicht auf einen gültigen Wert gesetzt worden ist, so wird in der Aktion 3 der Ruf zum Kommunikationspartner durchgestellt. Die Kommunikationsendeinrichtung EG1 reserviert daraufhin den benötigten Ressourcenumfang und meldet den Erfolg oder Misserfolg dieser Reservierung an die Verbindungssteuerung. Dies wird in der Abfrage 4 analysiert, wobei bei positiver Rückmeldung ein Übergang zur Aktion 5 erfolgt, in der der, der Kommunikationsendeinrichtung EG1 zugeordnete Zähler ZAEHL_{EG1} inkrementiert wird. Weiterhin wird der Rufaufbau zwischen den Kommunikationspartnern fortgesetzt - Aktion 6.

Optional, durch einen gestrichelten Pfeil angedeutet, kann nun der Erfolg des Rufaufbaus überprüft werden. Dies sollte im Normalfall gegeben sein, doch falls trotz positiver Meldung bei Abfrage 4 nun eine Erschöpfung der vorhandenen Ressourcen durch die Kommunikationsendeinrichtung EG1 gemeldet wird, erfolgt ein Übergang zu Aktion 8, in der die erste Anzahl ANZ1_{EG1} als der maximale Wert an gleichzeitig durch die Kommunikationsendeinrichtung EG1 zu bedienenden Verbindungen auf Wert des Zählers ZAEHL_{EG1} -1 gesetzt wird. Weiterhin erfolgt ein Übergang zu Aktion 10, die nachfolgend erläutert wird. Im Normalfall wird dagegen bei Abfrage 7 keine Erschöpfung der Ressourcen gemeldet, so dass ein Übergang zum Ausgangszustand 1 vollzogen werden kann.

Meldet dagegen die Kommunikationsendeinrichtung EG1 in Abfrage 4 eine Erschöpfung der Ressourcen der Kommunikationsendeinrichtung EG1, so kann der aktuelle Zählerstand von ZAEHL_{EC1} dazu verwendet werden, um die erste Anzahl ANZ1_{EG1} festzusetzen - Aktion 9. In der, den Aktionen 9 bzw. 8 folgenden Aktion 10, wird daraufhin eine Rufbehandlungsprozedur bei Erschöpfung der Ressourcen durchgeführt, beispielsweise das Zuspielen einer für diese Zwecke vorgesehenen Meldung an die Kommunikationspartner. Dem folgend wird in Aktion 11 der Wert einer zweiten Anzahl ANZ2_{EG1} - ANZ2_{EG1} entspricht ANZ2 aus den Figuren 1 und 2 - auf den Wert der ersten Anzahl ANZ1_{EG1} gesetzt, so dass damit eine Initialisierung für die Aktivphase durchgeführt wird. Daraufhin kann ein Übergang in den Ausgangszustand 1 der Verbindungssteuerung erfolgen.

Im Folgenden wird das Ablaufdiagramm für den Fall durchlaufen, dass ANZ1_{EG1} auf einen gültigen Wert gesetzt ist. Bei Eingehen der die Kommunikationsendeinrichtung EG1 betreffenden Verbindungsanforderung ergibt die Prüfung 2 somit ein positives Prüfergebnis und Aktion 12 wird ausgeführt. In Aktion 12 wird der Zähler der gleichzeitig aktiven Verbindungen - die zweite Anzahl ANZ2_{EG1} - inkrementiert. Bevor nun die Verbindungsanforderung umgesetzt wird, wird durch die Verbindungssteuerung in Abfrage 13 geprüft, ob die zweite Anzahl ANZ2_{EG1} bereits den Grenzwert der ersten Anzahl ANZ1_{EG1} erreicht hat. Ist dies nicht der Fall wird der Rufaufbau fortgesetzt - Aktion 16. Optional kann geprüft werden, ob nicht trotzdem, obwohl die Prüfung von ANZ2_{EG1} gegenüber ANZ1_{EG1} eigentlich genügend Ressourcen garantiert, ein Erschöpfen der Ressourcen durch die Kommunikationsendeinrichtung EG1 gemeldet wird - Abfrage 17. Ist dies nicht der Fall geht die Verbindungssteuerung in den Ausgangszustand 1 zurück. Ist dies dagegen der Fall, wird in Aktion 18 eine Prozedur zur Behandlung derartiger Situation aufgerufen. Darüber hinaus kann in Aktion 18 zur Sicherheit der Wert von ANZ2_{EG1} um zwei reduziert werden, so dass eine derartige Situation theoretisch nicht mehr eintreten kann. Weiterhin kann sich die Verbindungssteuerung individuell für die Kommunikationsendeinrichtung EG1 mittels eines Rücksetzmerkers speichern, dass eine derartige Situation eingetreten ist. Auf eine Auswertung des Rücksetzmerkers wird später eingegangen.

Liefert die Prüfung 13 ein Überschreiten von ANZ2_{EG1} gegenüber ANZ1_{EG1}, so sind bereits so viele Verbindungen zur Kommunikationsendeinrichtung EG1 aufgebaut, wie sie in der Lernphase als Maximalwert ermittelt wurden. Somit wird mittels Aktion 14 der Ruf abgewiesen und die zweite Anzahl ANZ2_{EG1} wieder auf den vorhergehenden Wert dekrementiert. Anschließend kann die Verbindungssteuerung in den Ausgangszustand 1 überführt werden.

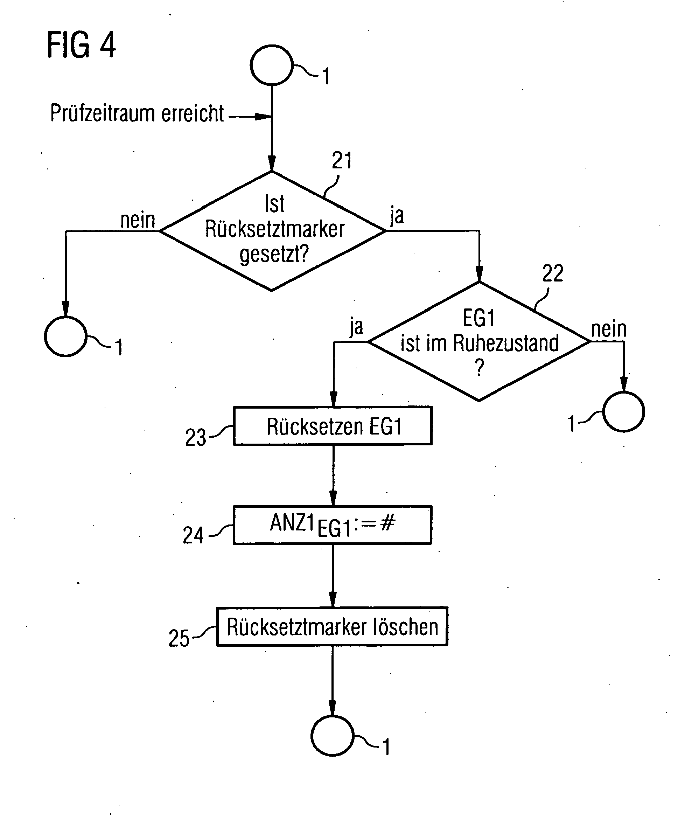

Anhand des Ablaufdiagramms von Figur 4 wird im Folgenden erläutert, welche Schritte aufgrund eines gesetzten Rücksetzermerkers ausgelöst werden können. Basierend auf der Annahme, dass in realen Implementierung Situationen auftreten können, in denen eine Freigabe von Ressourcen nicht umfassend erfolgen kann, kann es passieren, dass im Zeitverlauf der zur Verfügung stehende Freispeicher der Kommunikationsendeinrichtung EG1 reduziert wird, so dass - wie an Hand von Figur 3 angedeutet - es sich trotz Prüfung gegenüber der ersten Anzahl ANZ1_{EG1} ergeben kann, dass in Abfrage 17 eine Erschöpfung der Ressourcen gemeldet wird und daraus folgend durch die Verbindungssteuerung in Aktion 20 einen Rücksetzmerker kommunikationsendeinrichtungsspezifisch gesetzt wird. Ist nun ein gewisser Prüfzeitraum zum Prüfen aller Rücksetzmerker erreicht - beispielsweise die Nachtstunden von 3:00 Uhr bis 4:00 Uhr -, verlässt die Verbindungssteuerung ihren Ausgangzustand 1 und prüft in Abfrage 21 individuell für jede Kommunikationsendeinrichtung, ob der jeweilige Rücksetzmerker gesetzt ist. Ist dies für eine jeweilige Kommunikationsendeinrichtung nicht der Fall, so brauchen keine weiteren Aktionen ausgeführt werden und die Verbindungssteuerung kann in den Ausgangszustand 1 wechseln. Ist dagegen für die Kommunikationsendeinrichtung EG1 der zugehörige Rücksetzmerker gesetzt, so wird eine Neuinitialisierung der Kommunikationsendeinrichtung EG1 angestrebt - Aktion 23 -, sofern sich die Kommunikationsendeinrichtung EG1 nicht gerade aktiv in einem Verbindungszustand befindet. Dies wird in Abfrage 22 geprüft, wobei bei aktiven Kommunikationsendeinrichtungen ein Übergang in den Ausgangszustand 1 erfolgt, so dass eine Bereinigung der Ressourcen nicht erfolgt bzw. vorteilhafter Weise aufgeschoben wird. Andernfalls wird in Aktion 23 die Kommunikationsendeinrichtung EG1 neu initialisiert bzw. zurückgesetzt, so dass nicht korrekt freigegebene Ressourcen freigegeben werden.

Optional kann nun in Aktion 24 der Wert der ersten Anzahl ANZ1_{EG1} auf den Initialwert zurückgesetzt werden, so dass für die Kommunikationsendeinrichtung EG1 erneut die Lernphase ausgeführt wird.

In jedem Fall wird abschließend - Aktion 25 - der Rücksetzmerker für die Kommunikationsendeinrichtung EG1 gelöscht, da ja nun ein Zurücksetzen der Kommunikationsendeinrichtung EG1 erst einmal nicht erforderlich wird.

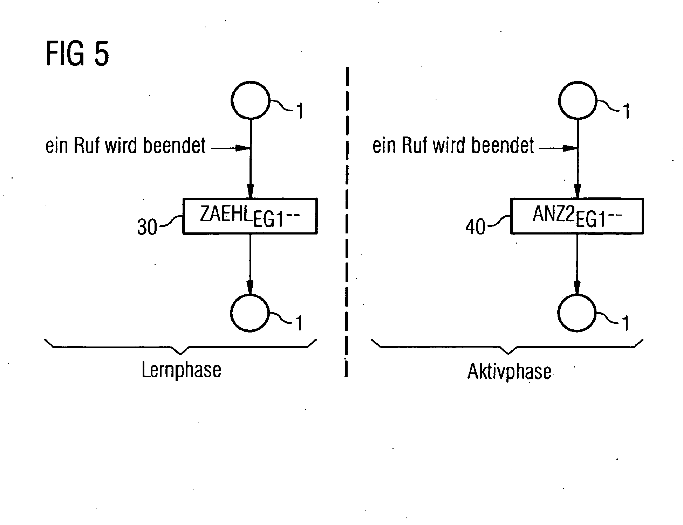

In Figur 5 wird nun zur Vervollständigung der Ablaufdiagramme die Aktualisierung der Zähler ZAEHL_{EG1} und der zweiten Anzahl ANZ2_{EG1} dargestellt, wenn ein Ruf, der Ressourcen bei der Kommunikationsendeinrichtung EG1 belegt hat, aktiv von einem der Kommunikationspartner beendet wird.

Bei Beendigung des Rufs wird von der Verbindungssteuerung davon ausgegangen, dass die Kommunikationsendeinrichtung EG1 die angeforderten Ressourcen wieder freigegeben hat. Im Fall für die Lernphase wird daraufhin der Zähler ZAEHL_{EG1}, der die Anzahl an gerade bestehenden Verbindungen zur Kommunikationsendeinrichtung EG1 repräsentiert, um eins erniedrigt. Für die Aktivphase verläuft dies analog, nur dass in diesem Fall durch die Verbindungssteuerung die zweite Anzahl ANZ2_{EG1} dekrementiert wird. Somit kann sichergestellt werden, dass die in der Verbindungssteuerung geführten Zähler ZAEHL_{EG1} und ANZ2_{EG1} die korrekte Situation in der Kommunikationsendeinrichtung EG1 widerspiegeln.

Das in den Figuren 1-5 vorgestellte Verfahren zeichnet sich insbesondere dadurch aus, dass die Belastung einer Kommunikationsendeinrichtung durch eine Verbindungssteuerung, gesteuert werden kann. Beispielsweise beim Neuinitialisieren der Kommunikationsendeinrichtung kann eine zentralisierte Steuerung vorteilhaft sein, da die Neuinitialisierung der Kommunikationsendeinrichtungen im Kommunikationssystem aufeinander abgestimmt werden kann, so dass nicht für zu viele Kommunikationsendeinrichtungen gleichzeitig Neuinitialisierungen ablaufen und das Kommunikationssystem oder die Verbindungssteuerung übermäßig belasten. Weiterhin ist vorteilhaft, dass teilweise in realen Kommunikationssystemen auftretende Probleme, wie das mangelhafte Freigeben von reserviertem Speicher oder weiterer Ressourcen, auf einfache Weise erkannt werden kann. Vorzugsweise kann ein derartiges Fehlverhalten mitprotokolliert werden, so dass schnell erkannt werden kann, für welche Endgeräte-Typen häufig derartige Probleme auftreten.

## Patentansprüche

1. Verfahren zum Abwickeln von, eine Kommunikationsendeinrichtung (EG1) betreffenden Verbindungen (V1, H1, H2, H3, REQ1, V2, H4, H5, H6), bei dem
- für jede in der Kommunikationsendeinrichtung (EG1) abzuwickelnde Verbindung (V1, H1, H2, H3, REQ1, V2, H4, H5, H6) Ressourcen (Rᵥ1, R_{H1}, R_{H}2, R_{H3}, R_{REQ1}, R_{V2}, R_{H}4, R_{H5}, R_{H6}) der Kommunikationsendeinrichtung (EG1) belegt werden,
- aufgrund eines Initialisierens einer, durch die Kommunikationsendeinrichtung (EG1) abzuwickelnden ersten Verbindung (REQ1),
a. bei Überschreiten einer kommunikationsendeinrichtungsspezifischen Ressourcenbelegungsobergrenze (OG) durch von der Kommunikationsendeinrichtung (EG1) belegten Gesamt-Ressourcen als Summe von belegten Ressourcen (RV1, RH1, RH2, RH3) aller bereits abgewickelten Verbindungen (V1, H1, H2, H3) sowie belegter und zu belegender Ressourcen (R_{REQ1}) der ersten Verbindung (REQ1),
das Überschreiten der Ressourcenbelegungsobergrenze (OG) an eine, an die Kommunikationsendeinrichtung (EG1) gekoppelte Verbindungssteuerung (VS) durch die Kommunikationsendeinrichtung (EG1) gemeldet wird,
**dadurch gekennzeichnet, dass**
b. infolge des Meldens, durch die Verbindungssteuerung (VS) eine erste Anzahl (ANZ1) der gleichzeitig abgewickelten Verbindungen (V1, H1, H2, H3) in einem der Verbindungssteuerung (VS) zugeordneten Speicher (VSSP) gespeichert wird,
- bei Initialisieren einer, durch die Kommunikationsendeinrichtung (EG1) abzuwickelnden zweiten Verbindung (REQ2),
c. durch die Verbindungssteuerung (VS) als zweite Anzahl (ANZ2) eine Gesamtanzahl an gleichzeitig durch die Kommunikationsendeinrichtung (EG1) abgewickelten und abzuwickelnden Verbindungen (V2, H4, H5, H6, REQ2) ermittelt wird,
d. bei Überschreiten der zweiten Anzahl (ANZ2) gegenüber der gespeicherten ersten Anzahl (ANZ1), ein Weiterleiten der zweiten Verbindung (REQ2) zum Abwickeln an der Kommunikationsendeinrichtung (EG1) durch die Verbindungssteuerung (VS) unterbleibt.

2. Verfahren nach Anspruch 1,
**dadurch gekennzeichnet,**
**dass** es sich bei den abzuwickelnden Verbindungen (V1, H1, H2, H3, V2, H4, H5, H6), sowie bei der ersten (REQ1) und der zweiten Verbindung (REQ2) jeweils um eine Signalisierungsverbindung handelt.

3. Verfahren nach einem der vorhergehenden Ansprüche,
**dadurch gekennzeichnet,**
**dass** die Ressourcenbelegungsobergrenze (OG) derart festgelegt wird, dass bei Erreichen der Ressourcenbelegungsobergrenze (OG) für die abgewickelten Verbindungen (V1, H1, H2, H3), genügend Ressourcen für ein erfolgreiches Abwickeln einer weiteren Verbindung durch die Kommunikationsendeinrichtung (EG1) zur Verfügung stehen.

4. Verfahren nach einem der vorhergehenden Ansprüche,
**dadurch gekennzeichnet,**
**dass** bei erfolgreichem Initialisieren einer abzuwickelnden Verbindung (V1, H1, H2, H3), ein die Anzahl an gleichzeitig erfolgreich abgewickelten Verbindungen (V1, H1, H2, H3) repräsentierender Zähler (ZAEHL) inkrementiert wird.

5. Verfahren nach einem der vorhergehenden Ansprüche,
**dadurch gekennzeichnet,**
**dass** durch die Verbindungssteuerung (VS) eine kommunikationsendeinrichtungsindividuelle Maximalanzahl an Warteplätzen einer Warteschlange von durch die Kommunikationsendeinrichtung (EG1) abzuwickelnden Verbindungen (V2, H4, H5, H6) auf den Wert der ersten Anzahl (ANZ1) gesetzt wird.

6. Verfahren nach einem der vorhergehenden Ansprüche,
**dadurch gekennzeichnet,**
**dass** bei Überschreiten der zweiten Anzahl (ANZ2) gegenüber der gespeicherten ersten Anzahl (ANZ1), durch die Verbindungssteuerung (VS) ein Aktivierungsversuch eines Leistungsmerkmals einer Untermenge der Gesamtheit von zur Verfügung stehenden Leistungsmerkmalen der Kommunikationsendeinrichtung (EG1) abgewiesen wird.

7. Verfahren nach einem der vorhergehenden Ansprüche,
**dadurch gekennzeichnet,**
**dass** bei Initialisieren einer dritten Verbindung und Melden eines Ressourcenmangels der Kommunikationsendeinrichtung (EG1) durch die Kommunikationsendeinrichtung (EG1) im Rahmen des Initialisierens ein Ressourcenmangel der Kommunikationsendeinrichtung (EG1) in der Verbindungssteuerung (VS) detektiert wird, ohne dass ein Überschreiten der zweiten Anzahl (ANZ2) gegenüber der gespeicherten ersten Anzahl (ANZ1) erkannt wird.

8. Verfahren nach Anspruch 7,
**dadurch gekennzeichnet,**
**dass** durch das Detektieren des Ressourcenmangels der Kommunikationsendeinrichtung (EG1) durch die Verbindungssteuerung (VS) ein zeitverzögertes Zurücksetzen der Kommunikationsendeinrichtung (EG1) bewirkt wird.

9. Kommunikationssystem zum Abwickeln von, eine Kommunikationsendeinrichtung (EG1) betreffenden Verbindungen (V1, H1, H2, H3, REQ1, V2, H4, H5, H6),
umfassend eine Kommunikationsendeinrichtung mit
- Mitteln zum Belegen von Ressourcen (R_{V1}, R_{H1}, R_{H2}, R_{H3}, R_{REQ1}, Rv2, R_{H4}, R_{H5}, R_{H6}) für jede in der Kommunikationsendeinrichtung (EG1) abzuwickelnde Verbindung (V1, H1, H2, H3, REQ1, V2, H4, H5, H6),
- einer Ressourcenermittlungseinheit zum Ermitteln der durch die Kommunikationsendeinrichtung (EG1) belegten Gesamt-Ressourcen als Summe von belegten Ressourcen (R_{V1}, R_{H1}, R_{H2}, R_{H3}) aller bereits abgewickelten Verbindungen (V1, H1, H2, H3) sowie belegter und zu belegender Ressourcen (R_{REQ1}) einer abzuwickelnden ersten Verbindung (REQ1), aufgrund eines Initialisierens der durch die Kommunikationseinrichtung (EG1) abzuwickelnden ersten Verbindung (REQ1).
- einer Ressourcenüberwachungseinheit zum Erkennen eines Überschreitens einer kommunikationsendeinrichtungsspezifischen Ressourcenbelegungsobergrenze (OG) durch die belegten Gesamt-Ressourcen,
- einer Meldeeinheit zum Melden des Überschreitens der Ressourcenbelegungsobergrenze (OG) durch die Gesamt-Ressourcen an eine, an die Kommunikationsendeinrichtung (EG1) gekoppelte Verbindungssteuerung (VS), und
umfassend eine
Verbindungssteuerung (VS) mit
- einer Meldeempfangseinheit zum Empfangen der Meldung von der Kommunikationsendeinrichtung (EG1),
**gekennzeichnet durch**
- eine Speichereinheit zum Speichern einer ersten Anzahl (ANZ1) der gleichzeitig abgewickelten Verbindungen (V1, H1, H2, H3) in einem der Verbindungssteuerung (VS) zugeordneten Speicher (VSSP) infolge des Meldens des Überschreitens der Ressourcenbelegungsobergrenze (OG) **durch** die Gesamt-Ressourcen,
- einer Ermittlungseinheit zum Ermitteln einer Gesamtanzahl an gleichzeitig **durch** die Kommunikationsendeinrichtung (EG1) abgewickelten und abzuwickelnden Verbindungen (V2, H4, H5, H6, REQ2) als zweite Anzahl (ANZ2), bei Initialisieren einer, **durch** die Kommunikationsendeinrichtung (EG1) abzuwickelnden zweiten Verbindung (REQ2),
- einer Weiterleitungsunterdrückungseinheit zum Verhindern eines Weiterleitens der zweiten Verbindung (REQ2) zum Abwickeln an der Kommunikationsendeinrichtung (EG1), bei Überschreiten der zweiten Anzahl (ANZ2) gegenüber der gespeicherten ersten Anzahl (ANZ1).

## Claims

1. A method for processing connections (V1, H1, H2, H3, REQ1, V2, H4, H5, H6) relating to a communication terminal (EG1), in which (method)
- resources (R_{V1}, R_{H1}, R_{H2}, R_{H3}, R_{REQ1}, R_{V2}, R_{H4}, R_{H5}, R_{H6}) of the communication terminal (EG1) are seized for each connection (V1, H1, H2, H3, REQ1, V2, H4, H5, H6) that is to be processed in the communication terminal (EG1),
- by virtue of an initialising of a first connection (REQ1) that is to be processed by the communication terminal (EG1),
a. if a communication terminal-specific upper resource seizure limit (OG) is exceeded by total resources seized by the communication terminal (EG1) as the sum of seized resources (R_{V1}, R_{H1}, R_{H2}, R_{H3}) of all already processed connections (V1, H1, H2, H3) as well as of seized and to be seized resources (R_{REQ1}) of the first connection (REQ1),
the exceeding of the upper resource seizure limit (OG) is signalled by the communication terminal (EG1) to a connection controller (VS) coupled to the communication terminal (EG1), wherein
b. as a result of the signalling, a first number (ANZ1) of the simultaneously processed connections (V1, H1, H2, H3) is stored by the connection controller (VS) in a memory (VSSP) associated with the connection controller (VS),
- on initialising of a second connection (REQ2) that is to be processed by the communication terminal (EG1),
c. a total number of connections (V2, H4, H5, H6, REQ2) that are processed and to be processed simultaneously by the communication terminal (EG1) is determined by the connection controller (VS) as the second number (ANZ2),
d. in the event of the second number (ANZ2) being exceeded compared with the stored first number (ANZ1), a forwarding of the second connection (REQ2) for processing at the communication terminal (EG1) is not carried out by the connection controller (VS).

2. A method according to claim 1 wherein the connections (V1, H1, H2, H3, V2, H4, H5, H6) that are to be processed as well as the first (REQ1) and second connection (REQ2) are each signalling connections.

3. A method according to any one of the preceding claims wherein the upper resource seizure limit (OG) is determined in such a way that when the upper resource seizure limit (OG) for the processed connections (V1, H1, H2, H3) is reached, sufficient resources are available for a successful processing of a further connection by the communication terminal (EG1).

4. A method according to any one of the preceding claims wherein upon the successful initialising of a connection (V1, H1, H2, H3) that is to be processed, a counter (ZAEHL) representing the number of simultaneously successfully processed connections (V1, H 1, H2, H3) is incremented.

5. A method according to any one of the preceding claims wherein the connection controller (VS) sets a communication terminal-individual maximum number of places in a queue of connections (V2, H4, H5, H6) waiting to be processed by the communication terminal (EG1) to the value of the first number (ANZ1).

6. A method according to any one of the preceding claims wherein if the second number (ANZ2) is exceeded compared with the stored first number (ANZ1), an attempt to activate a performance feature of a subset of the totality of available performance features of the communication terminal (EG1) is rejected by the connection controller (VS).

7. A method according to any one of the preceding claims wherein upon initialising of a third connection and signalling of a resource shortage of the communication terminal (EG1) by the communication terminal (EG1) as part of the initialising process, a resource shortage of the communication terminal (EG1) is detected in the connection controller (VS) without an exceeding of the second number (ANZ2) compared with the stored first number (ANZ1) being detected.

8. A method according to claim 7 wherein a delayed resetting of the communication terminal (EG1) is brought about through the detecting of the resource shortage of the communication terminal (EG1) by the connection controller (VS).

9. A communication system for processing connections (V1, H1, H2, H3. REQ1, V2, H4, H5, H6) relating to a communication terminal (EG1),
comprising a communication terminal having
- means for the seizing of resources (R_{V1}, R_{H1} R_{H2}, R_{H3}, R_{REQ1}, R_{V2}, R_{H4}, R_{H5}, R_{H6}) for each connection (V1, H1, H2, H3. REQ1, V2, H4, H5, H6) to be processed in the communication terminal (EG1),
- a resource monitoring unit for determining the total resources seized by the communication terminal (EG1) as the sum of seized resources (R_{V1}, R_{H1} R_{H2}, R_{H3}) of all already processed connections (V1, H1, H2, H3) as well as of seized and to be seized resources (RREQ1) of a first connection (REQ1) that is to be processed, on the basis of the initialising of the first connection (REQ1) that is to be processed by the communication device [sic] (EG1).
- a resource monitoring unit for detecting an exceeding of a communication terminal-specific upper resource seizure limit (OG) by the seized total resources,
- a signalling unit for signalling the exceeding of the upper resource seizure limit (OG) by the total resources to a connection controller (VS) coupled to the communication terminal (EG1), and comprising a connection controller (VS) which has
- a signal receiving unit for receiving the signal from the communication terminal (EG1), **characterised by**
- a storage unit for the storing of a first number (AN21) of the simultaneously processed connections (V1, H1, H2, H3) in a memory (VSSP) associated with the connection controller (VS) as a result of the signalling of the exceeding of the upper resource seizure limit (OG) by the total resources,
- a detection unit for determining a total number of connections (V2, H4, H5, H6, REQ2) processed and to be processed simultaneously by the communication terminal (EG1) as a second number (ANZ2), upon the initialising of a second connection (REQ2) that is to be processed by the communication terminal (EG1),
- a forwarding suppression unit for preventing a forwarding of the second connection (REQ2) for processing at the communication terminal (EG1) if the second number (ANZ2) is exceeded compared with the stored first number (ANZ1).

## Revendications

1. Procédé servant à exploiter des connexions (V1, H1, H2, H3, REQ1, V2, H4, H5, H6) concernant un équipement terminal de communication (EG1), dans le cadre duquel
- des ressources (Rᵥ₁, R_{HF}, R_{H2}, R_{H3}, R_{REQ1}, R_{V2}, R_{H4}, R_{H5}, R_{H6}) de l'équipement terminal de communication (EG1) sont occupées pour chaque connexion (V1, H1, H2, H3, REQ1, V2, H4, H5, H6) à exploiter dans l'équipement terminal de communication (EG1),
- du fait d'une initialisation d'une première connexion (REQ1) à exploiter par l'équipement terminal de communication (EG1),
a. le dépassement de la limite supérieure d'occupation des ressources (OG) est notifié par l'équipement terminal de communication (EG1) à un contrôleur de connexion (VS) couplé à l'équipement terminal de communication (EG1), dans le cas d'un dépassement d'une limite supérieure d'occupation des ressources (OG) spécifique à l'équipement terminal de communication par des ressources globalement occupées par l'équipement terminal de communication (EG1), en tant que somme des ressources (R_{V1}, R_{H1}, R_{H2}, R_{H3}) occupées de toutes les connexions (V1, H1, H2, H3) déjà exploitées ainsi que des ressources occupées et devant être occupées (R_{REQ1}) de la première connexion (REQ1),
**caractérisé en ce que**
b. suite à la notification, un premier nombre (ANZ1) de connexions (V1, H1, H2, H3) exploitées simultanément est mémorisé dans une mémoire (VSSP) associée au contrôleur de connexion (VS) par le contrôleur de connexion (VS),
- lors de l'initialisation d'une deuxième connexion (REQ2) à exploiter par l'équipement terminal de communication (EG1),
c. un nombre global de connexions (V2, H4, H5, H6, REQ2) exploitées ou devant être exploitées simultanément par l'équipement terminal de communication (EG1) est déterminé comme deuxième nombre (ANZ2) par le contrôleur de connexion (VS),
d. le contrôleur de connexion (VS) cesse de transférer la deuxième connexion (REQ2) à exploiter à l'équipement terminal de communication (EG1) dans le cas du dépassement du deuxième nombre (ANZ2) par rapport au premier nombre (ANZ1) mémorisé.

2. Procédé selon la revendication 1,
**caractérisé en ce que** les connexions (V1, H1, H2, H3, V2, H4, H5, H6) à exploiter ainsi que la première connexion (REQ1) et la deuxième connexion (REQ2) constituent respectivement une connexion de signalisation.

3. Procédé selon l'une quelconque des revendications précédentes, **caractérisé en ce que** la limite supérieure d'occupation des ressources (OG) est fixée de telle manière que lorsque la limite supérieure d'occupation des ressources (OG) est atteinte pour les connexions (V1, H1, H2, H3) exploitées, des ressources en quantité suffisante sont à disposition pour réussir l'exploitation d'une autre connexion par l'équipement terminal de communication (EG1).

4. Procédé selon l'une quelconque des revendications précédentes, **caractérisé en ce que** dans le cas d'une connexion (V1, H1, H2, H3) à exploiter initialisée avec succès, un compteur (ZAEHL) représentant le nombre de connexions (V1, H1, H2, H3) exploitées simultanément avec succès est incrémenté.

5. Procédé selon l'une quelconque des revendications précédentes, **caractérisé en ce que** le contrôleur de connexion (VS) attribue à la valeur du premier nombre (ANZ1) un nombre maximal, spécifique à l'équipement terminal de communication, de places d'une file d'attente de connexions (V2, H4, H5, H6) devant être exploitées par l'équipement terminal de communication (EG1).

6. Procédé selon l'une quelconque des revendications précédentes, **caractérisé en ce que** lors du dépassement du deuxième nombre (ANZ2) par rapport au premier nombre (ANZ1) mémorisé, une tentative d'activation d'une caractéristique de service d'un sous-ensemble de la globalité de caractéristiques de service de l'équipement terminal de communication (EG1) disponibles est refusée par le contrôleur de connexion (VS).

7. Procédé selon l'une quelconque des revendications précédentes, **caractérisé en ce que** lors de l'initialisation d'une troisième connexion et de la notification d'un manque de ressources de l'équipement terminal de communication (EG1) par l'équipement terminal de communication (EG1), un manque de ressources de l'équipement terminal de communication (EG1) est détecté dans le cadre de l'initialisation dans le contrôleur de connexion (VS), sans qu'un dépassement du deuxième nombre (ANZ2) par rapport au premier nombre (ANZ1) mémorisé ne soit identifié.

8. Procédé selon la revendication 7,
**caractérisé en ce que** la détection du manque de ressources de l'équipement terminal de communication (EG1) par le contrôleur de connexion (VS) permet le retardement d'une réinitialisation de l'équipement terminal de communication (EG1).

9. Système de communication servant à exploiter des connexions (V1, H1, H2, H3, REQ1, V2, H4, H5, H6) concernant un équipement terminal de communication (EG1),
comportant un équipement terminal de communication doté
- de moyens servant à occuper des ressources (R_{V1}, R_{H1}, R_{H2}, R_{H3}, R_{REQ1}, R_{V2}, R_{H4}, R_{H5}, R_{H6}) pour chaque connexion (V1, H1, H2, H3, REQ1, V2, H4, H5, H6) à exploiter dans l'équipement terminal de communication (EG1),
- d'une unité de détermination de ressources servant à déterminer les ressources globalement occupées par l'équipement terminal de communication (EG1) en tant que somme des ressources occupées (R_{V1}, R_{H1}, R_{H2}, R_{H3}) de toutes les connexions (V1, H1, H2, H3) déjà exploitées ainsi que des ressources occupées et devant être occupées (R_{REQ1}) d'une première connexion (REQ1) à exploiter, du fait d'une initialisation de la première connexion (REQ1 ) à exploiter par l'équipement terminal de communication (EG1),
- d'une unité de surveillance des ressources servant à identifier un dépassement d'une limite supérieure d'occupation des ressources (OG) spécifique à l'équipement terminal de communication par les ressources globalement occupées,
- d'une unité de notification servant à notifier à un contrôleur de connexion (VS) couplé à l'équipement terminal de communication (EG1), le dépassement de la limite supérieure d'occupation des ressources (OG) par les ressources globales, et
comportant
un contrôleur de connexion (VS) doté
- d'une unité de réception de notification servant à recevoir la notification de l'équipement terminal de communication (EG1),
**caractérisé par**
- une unité de mémorisation servant à mémoriser un premier nombre (ANZ1) de connexions (V1, H1, H2, H3) simultanément exploitées dans une mémoire (VSSP) associée au contrôleur de connexion (VS) suite à la notification du dépassement de la limite supérieure d'occupation des ressources (OG) par les ressources globales,
- une unité de détermination servant à déterminer le nombre global de connexions (V2, H4, H5, H6, REQ2) exploitées ou devant être exploitées simultanément par l'équipement terminal de communication (EG1) en tant que deuxième nombre (ANZ2), lors de l'initialisation d'une deuxième connexion (REQ2) devant être exploitée par l'équipement terminal de communication (EG1),
- d'une unité empêchant le transfert servant à empêcher un transfert de la deuxième connexion (REQ2) à exploiter à l'équipement terminal de communication (EG1), lors du dépassement du deuxième nombre (ANZ2) par rapport au premier nombre (ANZ1) mémorisé.
